# EUROPÄISCHE PATENTSCHRIFT

(11) **EP 3 275 599 B1**
(45) Veröffentlichungstag und Bekanntmachung des Hinweises auf die Patenterteilung: **09.01.2019**
(21) Anmeldenummer: 16400032.5
(22) Anmeldetag: 25.07.2016
(51) Int. Cl.: B25F 5/02, B25G 1/04

(54) **ANORDNUNG AUS GEHÄUSE UND FÜHRUNGSROHR UND HANDGEFÜHRTES ARBEITSGERÄT MIT EINER ANORDNUNG AUS GEHÄUSE UND FÜHRUNGSROHR**
ASSEMBLY COMPRISING A HOUSING AND GUIDE TUBE, HAND-HELD WORKING MACHINE COMPRISING A HOUSING AND GUIDE TUBE
SYSTEME DE CARTER ET TUBE GUIDE ET APPAREIL DE TRAVAIL MANUEL COMPRENANT UN SYSTEME DE CARTER ET TUBE GUIDE

(43) Veröffentlichungstag der Anmeldung: 31.01.2018
(73) Patentinhaber: Andreas Stihl AG & Co. KG, 71336 Waiblingen (DE)
(72) Erfinder: Förstner, Dirk, 70191 Stuttgart (DE); Failenschmid, Martin, 70329 Stuttgart (DE); Frencel, Konrad, 71726 Benningen (DE)
(74) Vertreter: Reinhardt, Annette

(56) Entgegenhaltungen:
- EP-A1- 1 974 597
- EP-A1- 2 534 994
- EP-A2- 0 653 364
- DE-U1-202012 005 607
- US-A1- 2003 001 387

## Beschreibung

Die Erfindung betrifft eine Anordnung aus Gehäuse und Führungsrohr der im Oberbegriff des Anspruchs 1 angegebenen Gattung sowie ein handgeführtes Arbeitsgerät mit einer Anordnung aus einem Gehäuse und einem Führungsrohr.
Aus der EP 0 893 045 A1 ist ein handgeführter Freischneider bekannt, der ein teleskopierbares Führungsrohr besitzt. Hierzu ist das Führungsrohr im Griffgehäuse längenverstellbar gehalten. Zur Sicherung der Drehlage während der Verstellung ist ein am Führungsrohr gehaltener Bolzen vorgesehen, der in eine Längsnut des Gehäuses ragt.

Eine Anordnung aus einem Gehäuse und einem Führungsrohr ist aus DE 20 2012 005 607 U1 bekannt.

Das Gehäuse derartiger Arbeitsgeräte ist üblicherweise aus zwei Gehäuseschalen aufgebaut, die an mehreren Verbindungsstellen miteinander verbunden, beispielsweise miteinander verschraubt sind. Unter Belastung können sich die beiden Gehäuseschalen voneinander weg bewegen. Sind die Gehäuseschalen aus Kunststoff, so ist auch eine Verformung der Gehäuseschalen möglich. Es hat sich gezeigt, dass der Bolzen am Führungsrohr bei Einwirkung entsprechend großer Drehmomente aus der Längsnut gedrückt werden kann und der Anschlag dadurch wirkungslos ist. Zudem können die Längswände der Längsnut beschädigt werden, so dass keine sichere Führung mehr gewährleistet ist.

Der Erfindung liegt die Aufgabe zugrunde, eine Anordnung aus einem Gehäuse und einem Führungsrohr bereitzustellen, deren Drehanschlag auch große Kräfte aufnehmen kann, ohne dabei beschädigt zu werden.

Diese Aufgabe wird durch eine Anordnung aus einem Gehäuse und einem Führungsrohr mit den Merkmalen des Anspruchs 1 gelöst. Bezüglich des handgeführten Arbeitsgeräts wird die Aufgabe durch ein handgeführtes Arbeitsgerät mit den Merkmalen des Anspruchs 15 gelöst.

Es ist vorgesehen, dass der Drehanschlag zwischen einer Längswand und einem Führungsteil gebildet ist. Das Führungsteil ist dabei nicht wie im Stand der Technik starr fixiert, beispielsweise am Führungsrohr, sondern kann gegenüber dem Führungsrohr verkippen. Die Kippachse verläuft dabei längs des Führungsrohrs und in einem Abstand zur Längsmittelachse des Führungsrohrs. Die Ausrichtung der Kippachse längs des Führungsrohrs bedeutet, dass die Kippachse parallel zur Längsmittelachse des Führungsrohrs ausgerichtet ist oder mit der Längsmittelachse des Führungsrohrs in Seitenansicht auf das Führungsrohr einen Winkel von höchstens 10° einschließt. Die Kippachse ist damit näherungsweise in Richtung der Längsmittelachse des Führungsrohrs ausgerichtet. Das Verkippen des Führungsteils bewirkt, dass sich die Höhe des Führungsteils vergrößert. Auch wenn sich der radiale Abstand zwischen den Komponenten des Drehanschlags, beispielsweise zwischen der Längswand und dem Führungsrohr, aufgrund einer Verformung des Gehäuses vergrößert hat und sich die radiale Überdeckung zwischen den Komponenten des Drehanschlags verringert hat, kann über die aufgrund des Verkippens vergrößerte Höhe des Führungsteils auf einfache Weise sichergestellt werden, dass das Führungsteil nicht an der Längswand vorbei gedrückt werden kann. Dadurch wird auf einfache Weise ein selbstverstärkender Drehanschlag bereitgestellt, da sich die radiale Überdeckung durch die zunehmende Höhe des Führungsteils beim Verkippen vergrößert. Je größer die in Umfangsrichtung auf den Drehanschlag ausgeübte Kraft, umso weiter verkippt das Führungsteil und umso größer wird die Höhe des Führungsteils und die Überdeckung, wodurch ein Verschwenken des Führungsrohrs gegenüber dem Gehäuse sicher vermieden wird. In dem Gehäuse können weitere Komponenten angeordnet sein. Das Gehäuse kann jedoch auch lediglich als Rohr ausgebildet sein, in dem das Führungsrohr gehalten ist. Das Gehäuse und das Führungsrohr bilden dann ein Teleskoprohr. Auch jede andere Gestalt des Gehäuses kann vorteilhaft sein.

Der Kippwinkel, um den das Führungsteil aus einer Ruhelage um die Kippachse verkippbar ist, beträgt vorteilhaft mindestens 1°. Als besonders vorteilhaft hat sich ein Kippwinkel von mindestens 5°, bevorzugt mindestens 10° herausgestellt. Über einen ausreichend großen Kippwinkel kann eine vergleichsweise große Erhöhung der Höhe des aus der Aufnahme ragenden Abschnitts des Führungsteils und damit eine große Überdeckung mit der Längswand erreicht werden. Die Kippachse verläuft vorteilhaft außerhalb des Führungsrohrs. Die Kippachse verläuft dabei vorteilhaft an einer Oberfläche, nämlich an der Innenwand oder an der Außenwand des Führungsrohrs. Ist das Führungsteil im Führungsrohr gelagert, so verläuft die Kippachse vorteilhaft an der Außenwand des Führungsrohrs. Ist das Führungsteil im Gehäuse gelagert, so verläuft die Kippachse vorteilhaft an der Innenwand des Führungsrohrs. Der Abstand der Kippachse zur Längsmittelachse des Führungsrohrs ist vorteilhaft mindestens so groß wie der Innenradius des Führungsrohrs. Die Kippachse verläuft vorteilhaft an einer in Längsrichtung verlaufenden Außenkante des Führungsteils. Das Führungsteil liegt dabei insbesondere linienförmig mit seiner Außenkante an der Innenwand oder der Außenwand des Führungsrohrs auf.

Das Führungsteil ist vorteilhaft in einer Aufnahme gehalten. In besonders bevorzugter Gestaltung ist die Aufnahme im Führungsrohr ausgebildet. Es kann jedoch auch vorgesehen sein, dass die Aufnahme im Gehäuse ausgebildet ist und die mindestens eine Längswand am Führungsrohr verläuft. Das Führungsteil besitzt einen Fuß, der mindestens teilweise in der Aufnahme angeordnet ist. Der Fuß ist vorteilhaft der Abschnitt, der in das Bauteil, in dem die Aufnahme ausgebildet ist, ragt. Bevorzugt ist der Fuß der in das Führungsrohr ragende Abschnitt des Führungsteils. Ein Kopf des Führungsteils ragt aus der Aufnahme und wirkt mit der Längswand zusammen. Die Längswand ist bevorzugt eine Längswand einer Nut, und der Kopf des Führungsteils ragt mindestens teilweise in die Nut. In radialer Richtung besitzen der Kopf des Führungsteils und die Längswand eine Überdeckung. Die Überdeckung bezeichnet den in radialer Richtung gemessenen Abstand zwischen der Oberseite des Kopfes und der Stirnseite der Längswand. Ist die Längswand am Gehäuse angeordnet, so ist die Stirnseite der Längswand die radial innenliegende Seite. Ist die Längswand am Führungsrohr angeordnet, so ist die Stirnseite die radial außenliegende Seite. Die Überdeckung bezeichnet die Überlappung von Längswand und Kopf in radialer Richtung.

Der Kopf des Führungsteils besitzt in unbelastetem Zustand, also wenn keine Kraft auf das Führungsteil ausgeübt wird, eine senkrecht zur Längsmittelachse und senkrecht zur radialen Richtung des Führungsrohrs gemessene Breite und eine radial zum Führungsrohr gemessene Höhe. Die Breite des Kopfes ist näherungsweise in Umfangsrichtung, nämlich tangential zur Umfangsrichtung gemessen. Die Breite des Kopfes ist dabei größer als die Höhe. Dadurch ergibt sich beim Verkippen des Kopfes des Führungsteils bereits bei geringen Kippwinkeln eine sehr deutliche Vergrößerung der Höhe.

Die Breite des Kopfes ist vorteilhaft größer als die in gleicher Richtung gemessene Breite der Aufnahme. Aufgrund der vergrößerten Breite des Kopfes wird auf einfache Weise verhindert, dass der Kopf in die Aufnahme oder durch die Aufnahme rutschen kann. Vorteilhaft bildet mindestens ein seitlich über die Aufnahme hinausragender Abschnitt des Kopfes den Auflageabschnitt, an dem die Kippachse verläuft.

In vorteilhafter Gestaltung besitzt der Kopf des Führungsteils eine in Richtung der Längsmittelachse gemessene Länge, die größer als die in gleicher Richtung gemessene Länge der Aufnahme ist. Die vergrößerte Länge des Kopfs des Führungsteils verhindert auf einfache Weise, dass der Kopf des Führungsteils in die Aufnahme rutschen kann. Der Kopf des Führungsteils deckt die Aufnahme vorteilhaft vollständig ab.

Der Fuß des Führungsteils besitzt eine Breite, die senkrecht zur radialen Richtung und senkrecht zur Längsmittelachse des Führungsrohrs gemessen ist. Die Breite des Fußes des Führungsteils ist tangential zur Umfangsrichtung gemessen. Die Breite des Fußes des Führungsteils ist bevorzugt kleiner als die Breite der Aufnahme. In vorteilhafter Gestaltung ist alternativ oder zusätzlich die in Richtung der Längsmittelachse gemessene Länge des Fußes kleiner als die in gleicher Richtung gemessene Länge der Aufnahme. Sind beide Abmessungen, also Länge und Breite, kleiner als die zugeordnete Abmessung der Aufnahme, so kann der Fuß besonders einfach durch die Aufnahme gesteckt werden. Ist nur eine der Abmessungen von Länge und Breite kleiner als die zugeordnete Abmessung der Aufnahme, so kann der Fuß vorteilhaft durch Verkippen in die Aufnahme eingesteckt werden. Die Sicherung des Führungsteils in der Aufnahme erfolgt bevorzugt über den Nutgrund der Führungsnut, dem der Kopf des Führungsteils zugewandt liegt. Eine separate Sicherung des Fußes des Führungsteils in der Aufnahme, beispielsweise über eine Schnappverbindung oder durch Einpressen des Fußes in die Aufnahme kann dadurch entfallen. Zu Montagezwecken kann es vorteilhaft sein, den Fuß des Führungsteils in einer Richtung etwas größer als die Aufnahme auszubilden, beispielsweise durch Anformen mindestens eines Stegs an einer Seite des Führungsteils, die keine Führungsfläche besitzt. Dadurch ist das Führungsteil nach dem Eindrücken in die Aufnahme in der Aufnahme gehalten, bis das Führungsrohr im Gehäuse montiert ist. Wird das Führungsrohr im Betrieb gegenüber dem Gehäuse verschwenkt, so kann der mindestens eine Steg verformt oder abgeschert werden, so dass das Führungsteil im üblichen Betrieb lose in der Aufnahme liegt und gegenüber dem Führungsrohr bereits bei geringen wirkenden Kräften verkippen kann.

Der Fuß besitzt vorteilhaft mindestens einen Führungsabschnitt, der sich beim Verkippen des Führungsteils um die Kippachse aus der Aufnahme bewegt. Um auch in gekipptem Zustand eine definierte Lage des Führungsteils in der Aufnahme zu erreichen, ist vorgesehen, dass der Führungsabschnitt sich zylinderabschnittsförmig um die zugeordnete Kippachse erstreckt. Die zugeordnete Kippachse ist die Kippachse, um die das Führungsteil verkippt, wenn sich dieser Führungsabschnitt aus der Aufnahme bewegt. In einem Schnitt senkrecht zur Längsmittelachse des Führungsrohrs beschreibt der Führungsabschnitt einen Bogen mit konstantem Radius um die zugeordnete Kippachse. Dadurch verändert sich der Abstand des Führungsabschnitts zum Längsrand der Aufnahme beim Verkippen nicht, und es ergibt sich während des Verkippens ein gleichbleibender Abstand zwischen dem Führungsabschnitt und der Aufnahme. Der Abstand des Führungsabschnitts zur Kippachse ist vorteilhaft nur geringfügig größer als der Abstand des benachbart zu dem Führungsabschnitt verlaufenden Längsrands der Aufnahme zur Kippachse, so dass der Fuß in jeder Kipplage mit geringem Spiel in der Aufnahme gehalten und geführt ist. Der Führungsabschnitt bewegt sich beim Verkippen vorteilhaft quer zur Längsrichtung des Führungsrohrs entlang des Längsrands der Aufnahme. Die Aufnahme besitzt vorteilhaft einen Querschnitt, der mindestens einen geradlinigen Abschnitt aufweist. Der geradlinige Abschnitt ist bevorzugt benachbart zu einem Führungsabschnitt angeordnet. Besonders vorteilhaft besitzt die Aufnahme dabei einen rechteckigen Querschnitt.

Um ein übermäßiges Verkippen und eine damit einhergehende Verformung und Beschädigung des Gehäuses zu vermeiden, ist vorteilhaft ein Anschlag vorgesehen, der den maximalen Kippwinkel festlegt. Der maximale Kippwinkel, also der Winkel, bei dem der Anschlag erreicht wird, beträgt vorteilhaft mindestens 10°, insbesondere mindestens 15°, bevorzugt mindestens 20°. Der maximale Kippwinkel wird vorteilhaft durch einen zwischen dem die Aufnahme tragenden Teil, also Führungsrohr oder Gehäuse, und dem Führungsteil gebildeten Anschlag bestimmt. Bevorzugt besitzt der Fuß einen Anschlagabschnitt, der mit dem die Aufnahme tragenden Teil, insbesondere mit dem Führungsrohr, den Anschlag bildet. Der Anschlagabschnitt ist vorteilhaft in jeder Lage des Führungsteils innerhalb des die Aufnahme tragenden Teils angeordnet. Der Anschlagabschnitt ist bevorzugt konvex oder konkav gewölbt, wobei der Wölbungsradius des Anschlagabschnitts insbesondere dem Innenradius des die Aufnahme tragenden Teils entspricht. Durch die konvexe oder konkave Wölbung des Anschlagabschnitts legt sich der Anschlagabschnitt an die Innenseite des die Aufnahme tragenden Teils an. Dadurch wird eine flächige Anlage des Anschlagabschnitts an der Innenseite des die Aufnahme tragenden Teils sichergestellt. "Innen" bezeichnet hierbei den Ort, an dem sich der Fuß befindet und "außen" den Ort, an dem sich der Kopf befindet. Wenn die Aufnahme im Führungsrohr ausgebildet ist, bezeichnet "innen" den radial innen liegenden Bereich.

In vorteilhafter Gestaltung besitzt die Aufnahme einen rechteckigen Querschnitt. Der Querschnitt des Fußes ist vorteilhaft ebenfalls rechteckig und auf den Querschnitt der Aufnahme angepasst. Der Querschnitt des Fußes ist dabei vorteilhaft etwas kleiner als der Querschnitt der Aufnahme. Das Führungsteil ist vorteilhaft mit geringem Spiel in der Aufnahme angeordnet. Vorteilhaft ist die Aufnahme am Führungsrohr ausgebildet. Das Führungsteil ist in Richtung der Längsmittelachse des Führungsrohrs vorteilhaft ortsfest an dem die Aufnahme tragenden Teil gehalten. Das Führungsteil kann dabei mit geringem Spiel in der Aufnahme angeordnet sein, bewegt sich jedoch bei einer Verschiebung des die Aufnahme tragenden Teils gegenüber dem die Längswand tragenden Teil mit dem die Aufnahme tragenden Teil mit. Bevorzugt bildet das Führungsteil mit dem Gehäuse oder mit dem Führungsrohr einen Anschlag für die maximal ausgezogene Länge des Führungsrohrs.

Der Kopf besitzt vorteilhaft mindestens eine ebene, flächige Flanke, die beim Verschwenken des Führungsrohrs um seine Längsmittelachse mit dem Längsrand zusammenwirkt. Die Flanke erstreckt sich in Längsrichtung des Führungsrohrs und vorteilhaft parallel zur radial ausgerichteten Mittellinie des Führungsteils. In vorteilhafter Gestaltung erstreckt sich die Flanke in Längsrichtung des Führungsrohrs und unter einem Winkel zur radial ausgerichteten Mittellinie des Führungsteils. Die Flanke ist gegenüber einer die Längsmittelachse des Führungsrohrs und die Mittellinie des Führungsteils enthaltenden Mittelebene geneigt. Der Neigungswinkel ist dabei vorteilhaft so gewählt, dass die Breite des Kopfes an der dem Fuß zugewandten Unterseite des Kopfes kleiner als an der dem Kopf zugewandten Oberseite ist. Dadurch kommt die Flanke des Kopfes beim Verkippen zunächst mit dem dem Fuß entfernt liegenden Bereich der Längswand in Kontakt. Die Längswand ist vorteilhaft an ihrem dem Fuß des Führungsteils abgewandten Bereich angebunden. Dadurch, dass der Abstand des Kontaktbereichs von Flanke und Längswand zum Anbindungsbereich der Längswand an das Gehäuse gering ist, ist auch das auf den Anbindungsbereich ausgeübte Moment gering, so dass die mechanische Belastung des Gehäuses im Anbindungsbereich der Längswand gering ist.

Besonders bevorzugt ist die Anordnung aus Gehäuse und Führungsrohr für ein handgeführtes Arbeitsgerät wie beispielsweise einen Rasentrimmer vorgesehen. Für ein handgeführtes Arbeitsgerät mit einer Anordnung aus einem Gehäuse und einem Führungsrohr ist vorgesehen, dass an einem ersten Ende des Führungsrohrs ein Werkzeugkopf angeordnet ist und am zweiten Ende des Führungsrohrs das Gehäuse angeordnet ist. Das Gehäuse bildet bevorzugt mindestens einen Handgriff des Arbeitsgeräts. Im Gehäuse kann außerdem ein Energiespeicher, beispielsweise ein Akku angeordnet sein.

Die Anordnung aus Gehäuse und Führungsrohr kann jedoch auch für andere Einsatzzwecke, beispielsweise für Teleskoprohre, vorgesehen sein. Das Gehäuse kann dabei auch rohrförmig ausgebildet sein.

Ausführungsbeispiele der Erfindung werden im Folgenden anhand der Zeichnung erläutert. Es zeigen:
- Fig. 1: eine schematische Seitenansicht eines handgeführten Arbeitsgeräts,
- Fig. 2: einen ausschnittsweisen Längsschnitt durch das Arbeitsgerät im Bereich der Längenverstelleinrichtung,
- Fig. 3: einen Schnitt entlang der Linie III-III in Fig. 1,
- Fig. 4: eine ausschnittsweise Seitenansicht auf eine Gehäuseschale des Gehäuses in Richtung des Pfeils IV in Fig. 3,
- Fig. 5: eine Seitenansicht des Führungsrohrs im Bereich des zweiten Endes des Führungsrohrs,
- Fig. 6: eine Seitenansicht in Richtung des Pfeils VI in Fig. 5,
- Fig. 7: einen Schnitt entlang der Linie VII-VII in Fig. 5;
- Fig. 8: einen Schnitt entlang der Linie VIII-VIII in Fig. 6,
- Fig. 9: eine schematische Schnittdarstellung durch Führungsrohr und Gehäuse in unverformtem Zustand des Gehäuses,
- Fig. 10: eine schematische Schnittdarstellung durch Führungsrohr und Gehäuse in verformtem Zustand des Gehäuses,
- Fig. 11: eine schematische Darstellung von Führungsrohr, Gehäuse und Führungsteil bei einer Schwenkbewegung des Führungsrohrs gegenüber dem Gehäuse in einer ersten Schwenkrichtung,
- Fig. 12: die Darstellung aus Fig. 11 bei einer Schwenkbewegung des Führungsrohrs in einer entgegengerichteten zweiten Schwenkrichtung,
- Fig. 13: eine schematische Schnittdarstellung von Führungsrohr, Führungsteil und Gehäuse in einer ersten Endlage,
- Fig. 14: eine ausschnittsweise Schnittdarstellung entlang der Linie XIV-XIV in Fig. 13,
- Fig. 15: eine Seitenansicht des Führungsrohrs in einer zweiten Endlage des Führungsteils, wobei nur eine Längswand des Gehäuses schematisch dargestellt ist,
- Fig. 16: einen Schnitt durch das Führungsteil und das Führungsrohr in der Position aus Fig. 15,
- Fig. 17: eine perspektivische Darstellung des Führungsteils,
- Fig. 18: eine Seitenansicht des Führungsteils,
- Fig. 19: eine Seitenansicht in Richtung des Pfeils XIX in Fig. 18,
- Fig. 20: eine Draufsicht in Richtung des Pfeils XX in Fig. 18.

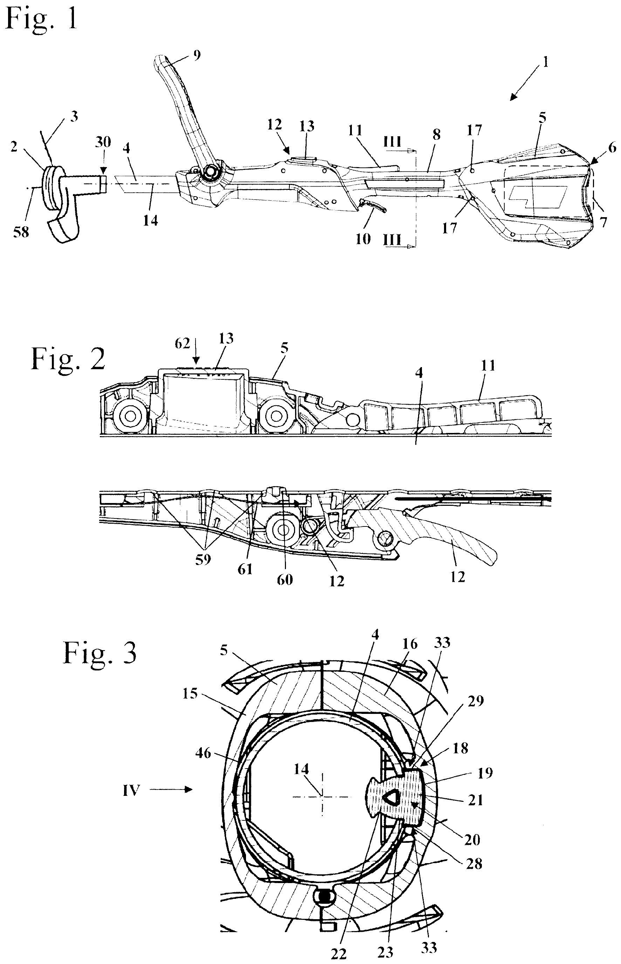

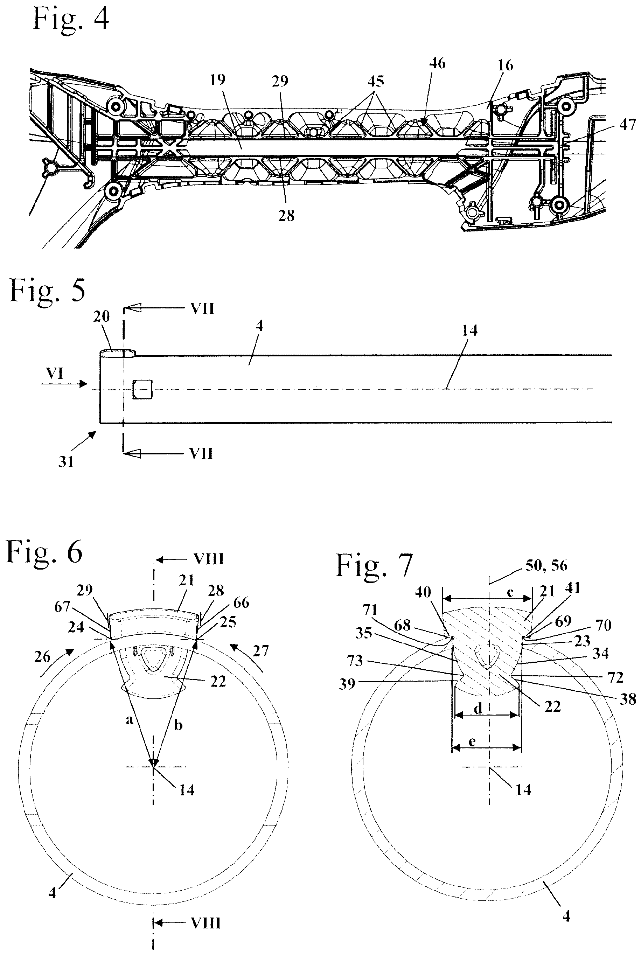

Fig. 1 zeigt als Ausführungsbeispiel für ein handgeführtes Arbeitsgerät einen Rasentrimmer 1. Der Rasentrimmer 1 besitzt einen Werkzeugkopf 2, an dem ein Schneidfaden 3 gehalten ist. Der Werkzeugkopf 2 ist an einem ersten Ende 30 eines Führungsrohrs 4 angeordnet. Im Betrieb rotiert der Werkzeugkopf 2 um eine Drehachse 58. Ein zweites, in Fig. 1 nicht gezeigtes Ende 31 des Führungsrohrs 4 (Fig. 4) ragt in ein Gehäuse 5 des Rasentrimmers 1. Am Gehäuse 5 ist eine Aufnahme 6 für einen Akku 7 ausgebildet. Die Aufnahme 6 und der Akku 7 sind in Fig. 1 schematisch dargestellt. Ist der Rasentrimmer 1 nicht akkubetrieben, sondern kabelgebunden, so kann am Gehäuse 5 ein Kabel zur Verbindung mit einer Energieversorgung festgelegt sein. Es kann auch ein Verbrennungsmotor zum Antrieb des Rasentrimmers 1 vorgesehen sein. Am Gehäuse 5 ist ein Handgriff 8 ausgebildet, der im Ausführungsbeispiel das Führungsrohr 4 umgibt, wie Fig. 2 zeigt. Am Gehäuse 5 ist außerdem ein Bügelgriff 9 schwenkbar gelagert. Am Handgriff 8 sind Bedienhebel 10 und 11 angeordnet, die zur Bedienung eines nicht gezeigten Antriebsmotors für den Werkzeugkopf 2 dienen. Der Antriebsmotor ist bevorzugt am ersten Ende 30 des Führungsrohrs 4 im Werkzeugkopf 2 angeordnet.

Die Längsmittelachse 14 des Führungsrohrs 4 verläuft in dem im Gehäuse 5 angeordneten Abschnitt geradlinig. Außerhalb des Gehäuses 5 kann das Führungsrohr 4 auch gebogen verlaufen, so dass auch die Längsmittelachse 14 einen gebogenen Verlauf besitzen kann. Die Richtungsangaben bezüglich der Längsmittelachse 14 beziehen sich vorliegend auf den im Gehäuse 5 angeordneten, geradlinig verlaufenden Abschnitt des Führungsrohrs 4.

Die Position des Führungsrohrs 4 gegenüber dem Gehäuse 5 ist in Richtung der Längsmittelachse 14 des Führungsrohrs 4 verstellbar, so dass die aus dem Gehäuse 5 ragende Länge des Führungsrohrs 4 einstellbar ist. Hierzu ist eine Längenverstelleinrichtung 12 vorgesehen, die über einen Entriegelungsknopf 13 entriegelt werden kann. Wie Fig. 2 zeigt, ist mit dem Entriegelungsknopf 13 ein Verriegelungszapfen 60 verbunden, der auf der dem Entriegelungsknopf 13 gegenüberliegenden Seite des Führungsrohrs 4 angeordnet ist und der in eine Verriegelungsöffnung 59 des Führungsrohrs 4 ragt. Das Führungsrohr 4 besitzt mehrere in einem Abstand zueinander angeordnete Verriegelungsöffnungen 59, die mögliche Verriegelungspositionen des Führungsrohrs 4 festlegen. Zum Entriegeln wird der Entriegelungsknopf 13 vom Bediener gedrückt und dadurch in einer Betätigungsrichtung 62 entgegen der Kraft einer Feder 61 bewegt. Im Ausführungsbeispiel ist die Feder 61 eine Blattfeder, die auf den Verriegelungszapfen 60 wirkt und diesen in die verriegelte Position drückt. Beim Entriegeln gelangt der Verriegelungszapfen 60 außer Eingriff mit dem Führungsrohr 4, so dass das Führungsrohr 4 in Richtung der Längsmittelachse 14 in die gewünschte Position bewegt werden kann. Zum Verriegeln wird der Entriegelungsknopf 13 losgelassen, und die Feder 61 drückt den Verriegelungszapfen 60 in eine Verriegelungsöffnung 59, wodurch das Führungsrohr 4 in seiner axialen Lage und seiner Winkellage fixiert wird. Bis der Verriegelungszapfen 60 in eine Verriegelungsöffnung 59 gelangt, kann eine Bewegung des Führungsrohrs 4 in Richtung seiner Längsmittelachse 14 notwendig sein. Der Verriegelungszapfen 60 sichert das Führungsrohr 4 sowohl in Richtung seiner Längsmittelachse 14 als auch in Umfangsrichtung, so dass auch eine Schwenkbewegung des Führungsrohrs 4 gegenüber dem Gehäuse 5 um seine Längsmittelachse 14 verhindert ist. Nur bei entriegelter Längenverstelleinrichtung 12 wäre ein Verschwenken des Führungsrohrs 4 um seine Längsmittelachse 14 möglich. Ein Verschwenken des Führungsrohrs 4 gegenüber dem Gehäuse 5 wird jedoch durch die nachfolgend beschriebene Verschwenksicherung 18 (Fig. 3) verhindert.

Wie Fig. 3 zeigt, ist das Gehäuse 5 im Ausführungsbeispiel aus zwei Gehäuseschalen 15 und 16 zusammengesetzt, die an in Fig. 1 exemplarisch gezeigten Verbindungsstellen 17 miteinander verbunden sind. Die Verbindung der beiden Gehäuseschalen 15 und 16 erfolgt bevorzugt in üblicher Weise durch Befestigungsschrauben, die von der einen Gehäuseschale aus in die andere Gehäuseschale eingeschraubt sind. Auch eine rohrförmige Gestaltung des Gehäuses 5 kann vorteilhaft sein.

Um die Ausrichtung des Werkzeugkopfs 2 gegenüber dem Gehäuse 5 auch bei entriegelter Längenverstelleinrichtung 12 festzulegen, ist die in Fig. 3 gezeigte Verschwenksicherung 18 für das Führungsrohr 4 vorgesehen. Die Verschwenksicherung 18 umfasst ein Führungsteil 20, das im Ausführungsbeispiel am Führungsrohr 4 gehalten ist und das in eine Nut 19 im Gehäuse 5 ragt. Die Nut 19 erstreckt sich parallel zur Längsmittelachse 14 des Führungsrohrs 4. Die Nut 19 besitzt einander gegenüberliegende Längswände 28 und 29, die in Umfangsrichtung zur Längsmittelachse 14 jeweils benachbart zu einer Seite des Führungsteils 20 liegen. Das Führungsteil 20 und die Längswand 28 bilden die Komponenten eines Drehanschlags 32. Das Führungsteil und die Längswand 29 bilden die Komponenten eines in die andere Drehrichtung wirkenden Drehanschlags 33. Die Längswände 28 und 29 können am Führungsteil 20 anliegen. Bevorzugt ist zwischen den Längswänden 28 und 29 und dem Führungsteil 20 jedoch ein geringer Abstand vorgesehen, so dass das Führungsteil 20 mit geringem Kraftaufwand an den Längswänden 28 und 29 entlang geschoben werden kann.

Die Umfangsrichtung, die axiale Richtung und die radiale Richtung beziehen sich vorliegend immer auf die Längsmittelachse 14 des Führungsrohrs 4, soweit nicht ausdrücklich anders angegeben.

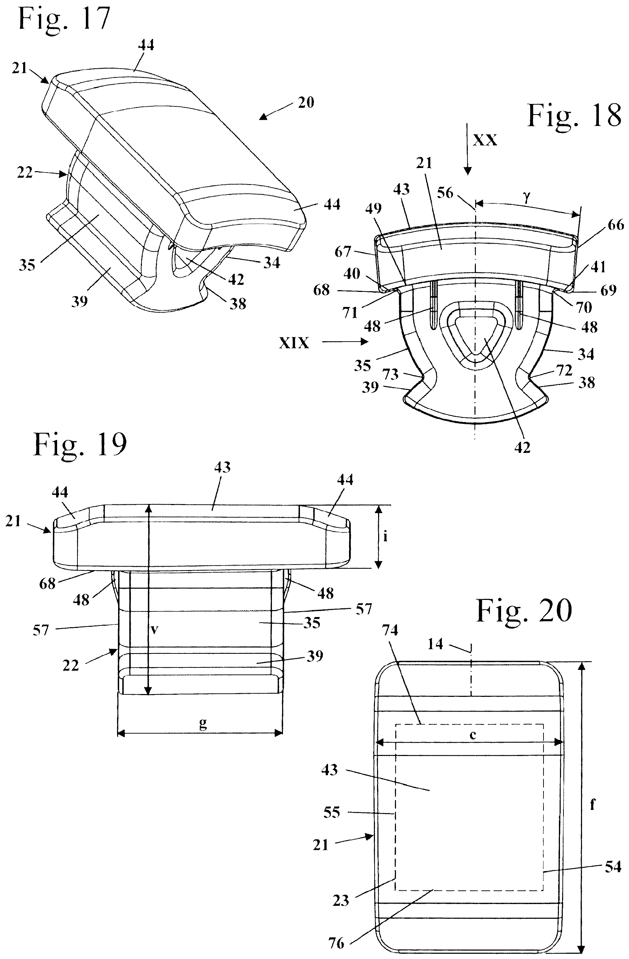

Das Führungsteil 20 besitzt einen Kopf 21, der in die Nut 19 ragt. Das Führungsteil 20 besitzt außerdem einen Fuß 22, der durch eine Aufnahme 23 im Führungsrohr 4 ins Innere das Führungsrohrs 4 ragt. Die Aufnahme 23 ist als Öffnung im Führungsrohr 4 . ausgebildet, die im Ausführungsbeispiel einen rechteckigen Querschnitt besitzt, wie Fig. 20 schematisch zeigt. Die Längsseiten der Aufnahme 23 verlaufen dabei parallel zur Längsmittelachse 14 des Führungsrohrs 4.

Fig. 4 zeigt die Nut 19 in der Gehäuseschale 16. In Richtung auf den Werkzeugkopf 2 (Fig. 1) wird die Nut 19 durch eine Anschlagrippe 47 begrenzt. In maximal aus dem Gehäuse 5 herausgezogener Position des Führungsrohrs 4 liegt das Führungsteil 20 an der Anschlagrippe 47 an und legt dadurch die Endlage des Führungsrohrs 4 fest. In der Gehäuseschale 16 ist ein Teil einer Führungsrohraufnahme 46 für das Führungsrohr 4 ausgebildet. Der andere, gegenüberliegende Teil der Führungsrohraufnahme 46 ist in der Gehäuseschale 15 ausgebildet. Wie auch Fig. 3 zeigt, weist die Führungsrohraufnahme 46 einen zylindrischen Innenraum auf, in dem das Führungsrohr 4 geführt ist. Die Wände der Führungsrohraufnahme 46 verlaufen jedoch, wie Fig. 4 zeigt, nicht durchgehend, sondern sind durch einzelne Rippen 45 gebildet, die im Ausführungsbeispiel in Seitenansicht schräg zur Längsmittelachse 14 (Fig. 3) und nicht radial verlaufen. Auch die Nut 19 kann durch einzelne Rippen begrenzt sein. Ist eine Verschwenkung des Werkzeugkopfs 2 gewünscht, beispielsweise in eine um 90° um die Längsmittelachse 14 verschwenkte Stellung, so können in der Führungsrohraufnahme 46 in Umfangsrichtung verlaufende Führungskanäle für das Führungsteil gebildet sein, die zwei im gewünschten Winkelabstand zueinander ausgebildete Nuten 19 miteinander verbinden.

Wie Fig. 5 zeigt, ist das Führungsteil 20 unmittelbar benachbart zum zweiten Ende 31 des Führungsrohrs 4 angeordnet. Im Ausführungsbeispiel schließt das Führungsteil 20 bündig mit dem Führungsrohr 4 ab.

Die Figuren 6 und 7 zeigen die Gestaltung des Führungsteils 20 im Führungsrohr 4 im Einzelnen. Die Figuren 6 und 7 zeigen das Führungsteil 20 in einer Ruhelage. Die Ruhelage ist die Lage, in der die Längswände 28 und 29 und das Führungsteil 20 keine Kraft aufeinander ausüben. In Fig. 6 sind die Längswände 28 und 29 schematisch eingezeichnet. In der Ruhelage verläuft die Aufnahme 23 benachbart zu dem Bereich, in dem Kopf 21 und Fuß 22 miteinander verbunden sind, und der Fuß 22 ist vollständig im Führungsrohr 4 angeordnet und der Kopf 22 vollständig außerhalb des Führungsrohrs 4. Der Kopf 21 liegt mit geringem beidseitigem Abstand zwischen den Längswänden 28 und 29. Der Kopf 21 des Führungsteils 20 liegt am Außenumfang des Führungsrohrs 4 an. Der Fuß 22 ragt durch die Aufnahme 23 (Fig. 7) in den Innenraum des Führungsrohrs 4.

Die in Fig. 7 gezeigten, parallel zur Längsmittelache 14 des Führungsrohrs 4 verlaufenden, am Außenumfang des Führungsrohrs 4 angeordneten Außenkanten 68 und 69 des Kopfes 21 bilden Kippachsen 24 und 25 für das Führungsteil 20. Die erste Kippachse 24 verläuft in einem Abstand a zur Längsmittelachse 14, der im Ausführungsbeispiel dem Radius des Führungsrohrs 4 entspricht. Die zweite Kippachse 25 besitzt zur Längsmittelachse 14 einen Abstand b, der im Ausführungsbeispiel gleich groß ist wie der Abstand a. Wird das Führungsrohr 4 gegenüber dem Gehäuse 5 in einer ersten Schwenkrichtung 26 verschwenkt, so verkippt das Führungsteil 20 um die erste Kippachse 24. Wird das Führungsrohr 4 in einer zweiten, entgegengerichteten zweiten Schwenkrichtung 27 gegenüber dem Gehäuse 5 verschwenkt, so verkippt das Führungsteil 20 um die zweite Kippachse 25. Dabei stützt sich das Führungsteil beim Verkippen um die erste Kippachse 24 mit dem Kopf 21 an der ersten Längswand 28 und der in Fig. 7 gezeigten Außenkante 68 am Führungsrohr 4 ab. An der Außenkante 68 verläuft die erste Kippachse 24. Bei einer Verschwenkung des Führungsrohrs 4 gegenüber dem Gehäuse 5 in der zweiten Schwenkrichtung 27 stützt sich das Führungsteil 20 beim Verkippen um die zweite Kippachse 25 mit dem Kopf 21 an der zweiten Längswand 29 und der zweiten Außenkante 69, die in Fig. 7 gezeigt ist, ab. Die zweite Außenkante 69 liegt dabei an der Außenseite des Führungsrohrs 4 an. Die Kippachse 24, 25 und die zugehörige Längswand 28, 29 liegen dabei jeweils auf unterschiedlichen Seiten einer in radialer Richtung 50 ausgerichteten Mittellinie 56 des Führungsteils 20. Die Mittellinie 56 fällt in der in Fig. 7 gezeigten Darstellung mit einer Mittelebene des Führungsteils 20 zusammen, die die Längsmittelachse 14 des Führungsrohrs 4 und die Mittellinie 56 enthält.

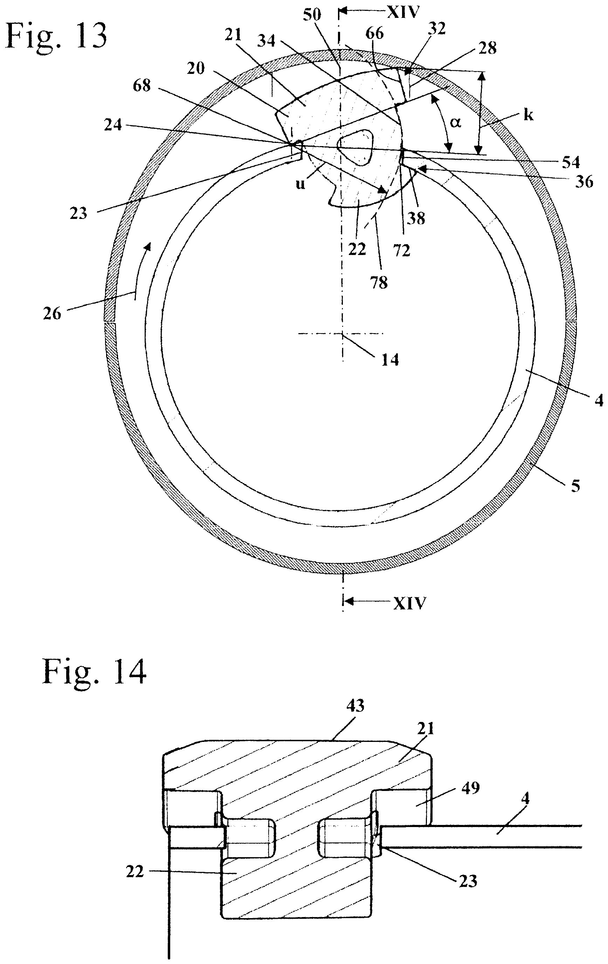

Wie Fig. 7 zeigt, besitzt das Führungsteil 20 an einer in Fig. 14 gezeigten Unterseite 49 seines Kopfes 21 Auflageabschnitte 40 und 41, mit denen das Führungsteil 20 am Außenumfang des Führungsrohrs 4 anliegt. In der Ruhelage liegen beide Auflageabschnitte 40 und 41 am Außenumfang des Führungsrohrs 4 an. Die Auflageabschnitte 40 und 41 erstrecken sich in Richtung der Längsmittelachse 14 vorteilhaft über die gesamte Länge des Kopfes 21. In Umfangsrichtung erstrecken sich die Auflageabschnitte 40, 41 jeweils von einer Außenkante 68, 69 in Richtung auf die Mittellinie 56 bis zu dem Bereich, in dem der Kopf 21 mit dem Fuß 22 verbunden ist. Die Kippachsen 24 und 25 verlaufen jeweils an den Außenkanten 68, 69 der Auflageabschnitte 40, 41. Der Kopf 21 besitzt in Umfangsrichtung liegende Flanken 66 und 67, mit denen der Kopf 21 an den Längswänden 28 und 29 zur Anlage kommt. Die Flanken 66 und 67 sind vorteilhaft eben und flächig ausgebildet und erstrecken sich in Richtung der Längsmittelachse 14. Die Außenkanten 68 und 69 verlaufen zwischen den Flanken 66 und 67 und den Auflageabschnitten 40 und 41. Die Außenkanten 68 und 69 erstrecken sich in Richtung der Längsmittelachse 14 des Führungsrohrs 4. Die Außenkanten 68 und 69 verlaufen parallel zur zugeordneten Kippachse 24, 25.

Wie Fig. 7 zeigt, besitzt der Kopf 21 eine Breite c, die breiter als eine Breite e der Aufnahme 23 ist. Die Breite c kann beispielsweise das 1,1 fache bis 1,5fache der Breite e der Aufnahme 23 betragen. Der Fuß 22 besitzt eine Breite d, die geringfügig kleiner als die Breite e der Aufnahme 23 ist. Dadurch kann der Fuß 22 durch die Aufnahme 23 ins Innere des Führungsrohrs 4 eingesteckt oder entnommen werden. Ein Verschnappen oder Verkanten des Führungsteils 20 in der Aufnahme 23 ist dabei im Ausführungsbeispiel nicht vorgesehen. Die Breiten c, d und e sind senkrecht zur Längsmittelachse 14 und senkrecht zu einer radialen Richtung 50 der Längsmittelachse 14 gemessen. Die radiale Richtung 50 ist in Fig. 7 mit strichpunktierter Linie eingezeichnet. Die Breiten c, d und e sind in Umfangsrichtung gemessen, wobei der bogenförmige Verlauf des Umfangs nicht berücksichtigt ist. Die Breiten c, d und e sind damit tangential zur Umfangsrichtung gemessen. Die Breite c ist zwischen den Flanken 66 und 67 gemessen. Die Breite c des Kopfes 21 ist vorteilhaft an der Unterseite 49 (Fig. 14) des Kopfes 21 größer als die Breite e der Aufnahme 23. Vorteilhaft vergrößert sich die Breite c radial nach außen, wie im Folgenden noch näher beschrieben wird.

Wie Fig. 7 auch zeigt, ist der Fuß 22 des Führungsteils 20 durch zwei Abschnitte gebildet, nämlich einem ersten Abschnitt, der durch Führungsabschnitte 34 und 35 begrenzt ist, und einem zweiten Abschnitt, an dem Anschlagabschnitte 38 und 39 ausgebildet sind. Die Führungsabschnitte 34 und 35 schließen an den Kopf 21 an. Zwischen den Führungsabschnitten 34 und 35 und dem Kopf 21 ist jeweils ein Absatz 70, 71 gebildet, an dem sich die Breite des Führungsteils 20 vom Kopf 21 zum Fuß 22 verringert. Die Führungsabschnitte 34 und 35 verlaufen bogenförmig, wobei die Breite des Fußes 22 im Bereich der Führungsabschnitte 34 und 35 radial nach innen abnimmt. Im Bereich der Anschlagabschnitte 38 und 39 nimmt die Breite des Fußes 22 radial nach innen wieder zu. Zwischen den Führungsabschnitten 34, 35 und den Anschlagabschnitten 38, 39 ist jeweils eine Einschnürung 72, 73 gebildet. An den Einschnürungen 72 und 73 besitzt das Führungsteil 20 seine minimale Breite. Der Führungsabschnitt 34 verläuft in Seitenansicht bogenförmig um die erste Kippachse 24 (Fig. 6). Der zweite Führungsabschnitt 35 verläuft in Seitenansicht bogenförmig um die zweite Kippachse 25 (Fig. 6). Die Führungsabschnitte 34 und 35 bilden damit Zylinderabschnitte.

Auch die Anschlagabschnitte 38 und 39 verlaufen gebogen, nämlich konvex gebogen. Die Wölbung der Anschlagabschnitte 38 und 39 entspricht dabei der Wölbung der Innenwand des Führungsrohrs 4, wie im Folgenden noch näher beschrieben wird.

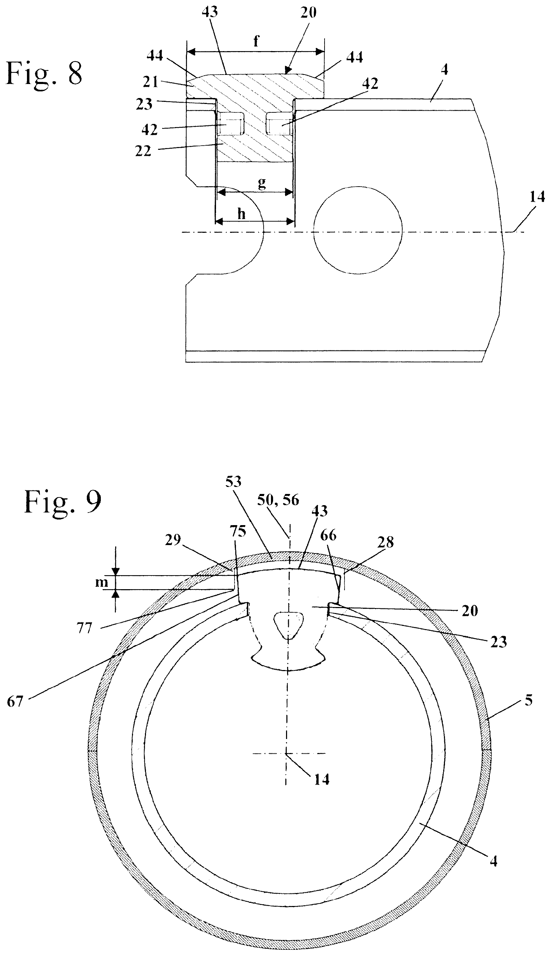

Fig. 8 zeigt das Führungsteil 20 in der Aufnahme 23 in einem Längsschnitt durch das Führungsrohr 4. Wie Fig. 8 zeigt, besitzt der Kopf 21 des Führungsteils 20 eine Oberseite 43, die dem Nutgrund 53 der Nut 19 (Fig. 9) zugewandt liegt. An den in Richtung der Längsmittelachse 14 vorne und hinten liegenden Bereichen besitzt die Oberseite 43 Abschrägungen 44. Der Kopf 21 besitzt eine in Richtung der Längsmittelachse 14 gemessene Länge f. Wie Fig. 8 zeigt, ist die Länge f des Kopfes 21 deutlich größer als die Länge h der Aufnahme 23, die in gleicher Richtung gemessen ist. Die Länge f kann beispielsweise das 1,5fache bis 2,5fache der Länge h der Aufnahme 23 betragen. Der Fuß 22 besitzt eine Länge g, die geringfügig kleiner als die Länge h ist. Dadurch kann das Führungsteil 20 mit einem Fuß 22 durch die Aufnahme 23 gesteckt werden und liegt lose in der Aufnahme 23. Wie Fig. 8 auch zeigt, besitzt der Fuß 22 an seinen in Längsrichtung liegenden Stirnseiten Vertiefungen 42 in dem zwischen den Führungsabschnitten 34 und 35 liegenden Bereich (Fig. 7). Durch die Vertiefungen 42 werden gleichmäßige Wandstärken erreicht, so dass das Führungsteil 20 einfach in einem Spritzgussverfahren, bevorzugt aus Kunststoff herstellbar ist.

Die Figuren 9 bis 13 zeigen das Führungsteil 20 im Führungsrohr 4, wobei das Gehäuse 5 schematisch dargestellt ist. Fig. 9 zeigt das Führungsteil 20 in Ruhelage und das Gehäuse 5 schematisch in unverformtem Zustand. In Ruhelage besitzen das Führungsteil und die Längswand 29 eine Überdeckung m, die parallel zu einer Mittellinie 56 des Führungsteils 20 gemessen ist. Die Mittellinie 56 ist radial zur Längsmittelachse 14 des Führungsrohrs 4 ausgerichtet. Im Ausführungsbeispiel liegt die Mittellinie 56 in der Symmetrieebene des Führungsteils 20. Die Überdeckung ist an der Flanke 67 zwischen einer Oberkante 75, an der die Oberseite 43 an die Flanke 67 angrenzt, und einer Stirnseite 77 der Längswand 29 gemessen. Die Stirnseite 77 ist die dem Nutgrund 53 entfernt liegende, radial innen liegende Längskante der Längswand 29. Auf der gegenüberliegenden Seite besitzt die Flanke 66 eine entsprechende, in Fig. 9 nicht eingezeichnete Überdeckung mit der Längswand 28.

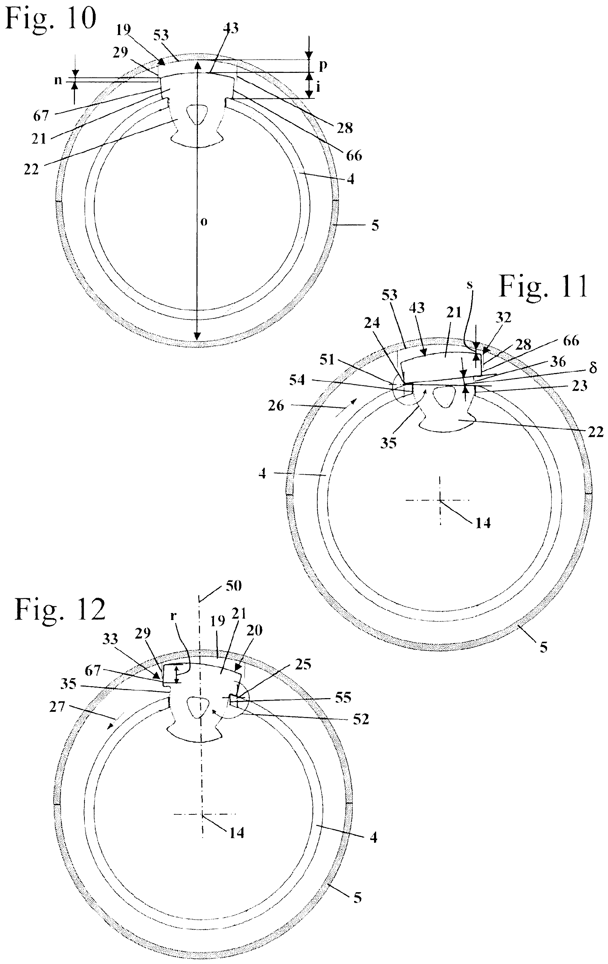

Fig. 10 zeigt die Anordnung nach dem Lösen der Längenverstelleinrichtung 12 oder anderer Belastung des Gehäuses 5. Insbesondere beim Lösen der Längenverstelleinrichtung 12 kann sich das Gehäuse 5 verformen. Das Führungsrohr 4 wird außerdem in radialer Richtung gegenüber dem Gehäuse 5 ausgelenkt. Fig. 10 zeigt schematisch die verformte Gestalt des Gehäuses 5, das in diesem Zustand einen vergrößerten Innendurchmesser o besitzt. Der Kopf 21 besitzt eine Höhe i, die senkrecht zur Längsmittelachse 14 (Fig. 11) und in radialer Richtung zur Längsmittelachse 14 gemessen ist. Zwischen der Oberseite 43 des Kopfes 21 und einem Nutgrund 53 der Nut 19 ist aufgrund der Verformung ein vergrößerter Abstand p gebildet. In unbelastetem Zustand ist zwischen dem Nutgrund 53 und der Oberseite 43 des Kopfs 21 lediglich ein geringer Abstand gebildet, oder die Oberseite 43 liegt am Nutgrund 53 an, wie Fig. 9 zeigt. Der Kopf 21 besitzt zur Längswand 29 eine Überdeckung n, die deutlich kleiner als die Überdeckung m in Ruhelage (Fig. 9) ist.

Wird das Führungsrohr 4 bei gelöster Längenverstelleinrichtung 12 (Fig. 2) in der ersten Schwenkrichtung 26 verschwenkt, so verkippt dadurch das Führungsteil 20, wie Fig. 11 zeigt. In Fig. 11 ist das Führungsteil 20 gegenüber der Ruhelage um einen Kippwinkel δ verschwenkt, der mindestens 1°, insbesondere mindestens 5°, vorzugsweise mindestens 10° beträgt. Der Kippwinkel δ entspricht dem maximalen Kippwinkel des Führungsteils 20, bei dem das Führungsteil 20 noch nicht mit seinem Kopf 21 gegen das Gehäuse 5 drückt und das Gehäuse 5 verformt. Der Kopf 21 des Führungsteils 20 liegt mit seiner Flanke 66 an der Längswand 28 an. Die Längswand 28 drückt gegen den Kopf 21, und der Fuß 22 des Führungsteils 20 stützt sich mit seinem Führungsabschnitt 35 an dem der Längswand 28 gegenüberliegenden Längsrand 54 der Aufnahme 23 ab. Dadurch wird ein Kippmoment auf das Führungsteil 20 ausgeübt, das eine Verschwenkung in einer ersten Kipprichtung 51 bewirkt. Die Kippbewegung erfolgt dabei um die erste Kippachse 24.

Wird das Führungsrohr 4 in der entgegengerichteten zweiten Schwenkrichtung 27 gegenüber dem Gehäuse 5 verschwenkt, so erfolgt ein Verkippen des Führungsteils 20 um die zweite Kippachse 25, wie Fig. 12 zeigt. Dabei stützt sich das Führungsteil 20 mit seiner Flanke 67 an der zweiten Längswand 29 des Gehäuses 5 und an einem zweiten, der Längswand 29 entfernt liegenden Längsrand 55 der Aufnahme 23 ab. Durch den Versatz der Längswand 29 und des Längsrands 55 in radialer Richtung 50 zur Längsmittelachse 14 wird ein Kippmoment auf das Führungsteil 20 ausgeübt, das zu einem Verkippen in der zweiten Kipprichtung 52 um die zweite Kippachse 25 führt, wie in Fig. 12 schematisch dargestellt ist. Wie die Figuren 11 und 12 zeigen, vergrößert sich beim Verkippen die radial zur Längsmittelachse 14 gemessene Höhe des aus dem Führungsrohr 4 ragenden Abschnitts des Führungsteils 20. Dadurch ist im Ausführungsbeispiel der zwischen dem Führungsrohr 4 und dem Gehäuse 5 gebildete vergrößerte Abstand p (Fig. 10) nach geringfügigem Verschwenken des Führungsrohrs 4 gegenüber dem Gehäuse 5 überbrückt, wie die Figuren 11 und 12 zeigen. Das Führungsteil 20 besitzt zur Längswand 29 eine Überdeckung r, die gegenüber der Überdeckung n in verformtem Zustand des Gehäuses 5 und gegenüber der Überdeckung m in Ruhelage vergrößert ist. Eine entsprechende vergrößerte Überdeckung ergibt sich beim Verkippen des Führungsteils 20 um die Kippachse 24, wie Fig. 11 zeigt. Dadurch können die Längswände 28 und 29 nicht über den Kopf 21 des Führungsteils 20 gedrückt werden. Zwischen dem Nutgrund 53 und der Oberseite 43 des Kopfs 21 besteht nach dem Verkippen lediglich ein schmaler Spalt oder die Oberseite 43 liegt am Nutgrund 53 an. Zwischen der Oberseite 43 und dem Nutgrund 53 besteht ein Abstand s, der der besseren Übersicht halber in Fig. 11 eingezeichnet ist. Der Abstand s ist deutlich kleiner als der Abstand p, der sich bei verformtem Gehäuse und in Ruhelage des Führungsteils 20 ergibt. Dadurch ist das auf die Längswand 28 bzw. 29 bezogen auf den Nutgrund 53 ausgeübte Biegemoment vergleichsweise klein.

Beim Verschwenken des Führungsrohrs 4 gegenüber dem Gehäuse 5 wird aufgrund der Kippbewegung des Führungsteils 20 das Gehäuse 5 weiter verformt. Um Beschädigungen des Gehäuses 5 durch übermäßiges Verkippen des Führungsteils 20 zu vermeiden, sind Anschläge zur Begrenzung des maximalen Kippwinkels vorgesehen. Fig. 13 zeigt das Führungsteil 20 in einer ersten Endlage, in die das Führungsteil 20 durch Verkippen um die erste Kippachse 24 gelangt ist. Gegenüber seiner in Fig. 7 gezeigten Ruhelage ist das Führungsteil 20 um einen Kippwinkel α verkippt, der mehr als 10°, insbesondere mehr als 15° beträgt. Im Ausführungsbeispiel ist ein Kippwinkel α von mehr als 20° vorgesehen. In der in Fig. 13 gezeigten Endlage liegt der Fuß 22 mit seinem ersten Anschlagabschnitt 38 an der Innenseite des Führungsrohrs 4 an und bildet mit diesem einen Anschlag 36. Die konvexe Wölbung des Anschlagabschnitts 38 ist so ausgebildet, dass der Anschlagabschnitt 38 flächig an der Innenseite des Führungsrohrs 4 anliegt. Die erste Einschnürung 72 liegt benachbart zum Längsrand 54 der Aufnahme 23 an der Innenseite des Führungsrohrs 4. Das Führungsteil 20 hakt mit der Einschnürung 72 näherungsweise an der Aufnahme 23 ein. Der aus dem Führungsrohr 4 ragende Abschnitt des Führungsteils 20 besitzt eine Höhe k, die deutlich größer als die Höhe i des Kopfs 21 ist. Die Höhe k beträgt im Ausführungsbeispiel in der Endlage des Führungsteils 20 das 1,5fache bis 2,5fache der Höhe i (Fig. 10). Die Höhe k ist dabei in radialer Richtung 50 der Längsmittelachse 14 gemessen. Der erste Führungsabschnitt 34 ist teilweise in der Aufnahme 23 und teilweise außerhalb des Führungsrohrs 4 angeordnet. Durch das Führungsteil 20 wird ein weiteres Verschwenken des Führungsrohrs 4 aus der in Fig. 13 gezeigten Stellung in der ersten Schwenkrichtung 26 verhindert.

Der Kippwinkel δ, um den das Führungsteil 20 verkippbar ist, beträgt vorteilhaft mindestens 1°, insbesondere mindestens 5°, bevorzugt mindestens 10°. Dadurch kann eine ausreichend große Überdeckung r in verkipptem Zustand des Führungsteils 20 sichergestellt werden.

Wie Fig. 13 zeigt, bilden die Längswand 28 und die Flanke 66 des Führungsteils 20 den ersten Drehanschlag 32, der die Verschwenkung des Führungsrohrs 4 in der ersten Schwenkrichtung 26 begrenzt. In Fig. 13 ist dabei die Längswand 28 der besseren Übersicht halber mit geringem Abstand zum Kopf 21 eingezeichnet. In der tatsächlichen Gestaltung liegt der Kopf 21 an der Längswand 28 an und stützt sich an dieser ab. Der Kopf 21 liegt dabei in einem Abstand zum Führungsrohr 4 an der Längswand 28 an. Die Flanke 66 liegt mit dem an die Oberseite 43 des Kopfes 21 angrenzenden Bereich an der Längswand 28 an. Die Längswand 28 bildet ein Gegenlager für das Führungsteil 20. Die gegenüberliegende Außenkante 68 des Führungsteils 20 bildet mit der Außenwand des Führungsrohrs 4 das zugehörige Auflager, an dem sich das Führungsteil 20 abstützt. Der Längsrand 54 der Aufnahme 23 liegt benachbart zum ersten Führungsabschnitt 34. Beim Verkippen aus der in Fig. 10 gezeigten Ruhelage über die in Fig. 11 gezeigte Kipplage bis in die in Fig. 13 gezeigte Endlage schwenkt der erste Führungsabschnitt 43 in geringem Abstand an dem Längsrand 54 entlang. Aufgrund des durch den Führungsabschnitts 43 gebildeten, in Fig. 13 mit gestrichelter Linie eingezeichneten Zylinderabschnitts 78 bleibt der Abstand zwischen Längsrand 54 und Führungsabschnitt 43 während des Verkippens konstant. Der Radius u des Zylinderabschnitts 78 entspricht dabei dem Abstand der Kippachse 24 zum zugehörigen Führungsabschnitt 34.

Wie Fig. 14 zeigt, besitzt der Kopf 21 eine dem Führungsrohr 4 zugewandte Unterseite 49, mit der er in Ruhelage an der Außenseite des Führungsrohrs 4 anliegt. In der in Fig. 13 gezeigten verkippten Stellung ist die Unterseite 49 vom Führungsrohr 4 abgehoben. Lediglich im Bereich der ersten Kippachse 24 hat die Unterseite 49 Kontakt zur Außenseite des Führungsrohrs 4, wie Fig. 13 zeigt.

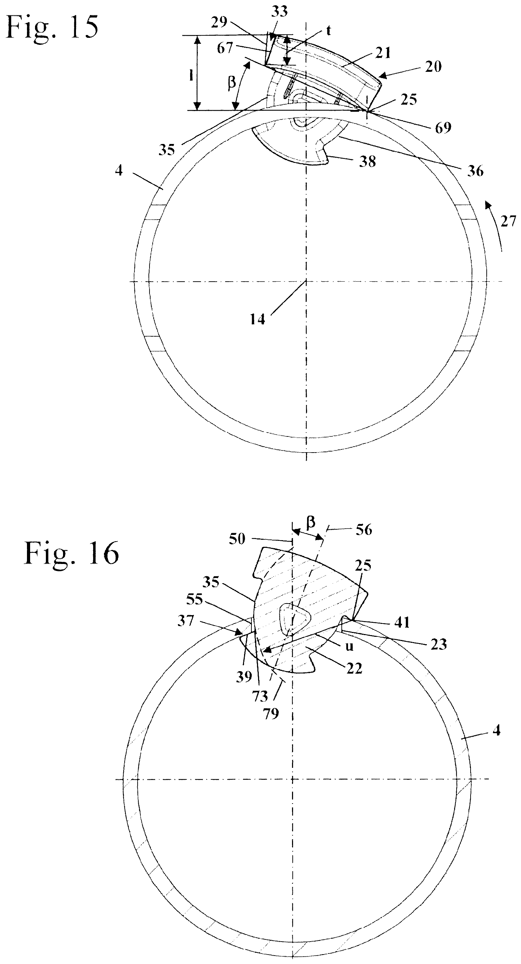

Die Figuren 15 und 16 zeigen das Führungsteil 20 in der maximal um die zweite Kippachse 25 verkippten Stellung. Das Führungsteil 20 ist gegenüber der Ruhelage um einen Kippwinkel β verkippt. Beim Verkippen des Führungsteils aus der Ruhelage in die in Fig. 16 gezeigte Endstellung bewegt sich der Führungsabschnitt 35 in geringem Abstand am Längsrand 55 der Aufnahme 23 entlang. Der Führungsabschnitt 35 besitzt die Form eines in Fig. 16 gestrichelt gezeigten Zylinderabschnitts 79 mit einem Radius u um die Kippachse 25. Der Radius u entspricht dabei dem Abstand der Kippachse 25 zum Führungsabschnitt 35. Im Ausführungsbeispiel ist das Führungsteil 20 symmetrisch ausgebildet, und die Kippwinkel α und β sind gleich groß. Es kann jedoch auch eine unsymmetrische Gestaltung des Führungsteils 20 vorteilhaft sein, wobei auch unterschiedliche Kippwinkel α und β vorteilhaft sein können. Der aus dem Führungsrohr 4 ragende Abschnitt des Führungsteils 20 besitzt eine Höhe 1, die deutlich größer als die Höhe i des Kopfs 21 in Ruhelage ist (Fig. 10). Dadurch ergibt sich eine Überdeckung t zwischen der Flanke 67 und der Längswand 29, die deutlich größer als die Überdeckung m in Ruhelage (Fig. 9) und die Überdeckung n in verformtem Zustand des Gehäuses 5 (Fig. 10) ist. Die Überdeckung t ist vorteilhaft auch größer als die Überdeckung r bei geringerem Kippwinkel (Fig. 12). Wie Fig. 16 zeigt, ergibt sich der Kippwinkel β auch zwischen einer Mittellinie 56 des Führungsteils 20 und der radialen Richtung 50. Im Ausführungsbeispiel ist die Mittellinie 56 in Ruhelage in radialer Richtung 50 ausgerichtet. Bei der Verkippung um die zweite Kippachse 25 (Fig. 15) liegt das Führungsteil 20 mit dem zweiten Auflageabschnitt 41 an der Außenseite des Führungsrohrs 4 an. Zwischen dem Führungsrohr 4 und dem Fuß 22 ist ein zweiter Anschlag 37 gebildet. Der zweite Anschlag 37 ist durch den zweiten Anschlagabschnitt 39 gebildet, der an der Innenwand des Führungsrohrs 4 flächig anliegt. Die zweite Einschnürung 73 ist in der in Fig. 16 gezeigten Endlage des Führungsteils 20 an der Innenseite des Führungsrohrs 4 benachbart zum Längsrand 55 der Aufnahme 23 angeordnet. Das Führungsteil 20 hakt in dieser Endlage mit der Einschnürung 73 an der Aufnahme 23 ein.

Bei einer Verschwenkung des Führungsrohrs 4 gegenüber dem Gehäuse 5 in der zweiten Schwenkrichtung 27 bildet die Längswand 29 mit der Flanke 67 des Führungsteils 20 den zweiten Drehanschlag 33, der die Relativverschwenkung des Führungsrohrs 4 gegenüber dem Gehäuse 5 in der zweiten Schwenkrichtung 27 begrenzt.

Die Figuren 17 bis 20 zeigen das Führungsteil 20 im Einzelnen. Wie die Figuren zeigen, ist der Kopf 21 nach Art eines Daches ausgebildet, das vorteilhaft allseitig über den Fuß 22 übersteht. Bevorzugt steht der Kopf 21 mindestens in einer Richtung von Umfangsrichtung und Richtung der Längsmittelachse 14 des Führungsrohrs 4 über den Fuß 22 über. Besonders vorteilhaft steht der Kopf 21 zumindest in Umfangsrichtung über den Fuß 22 über. In Fig. 20 ist schematisch die Aufnahme 23 mit ihren Längsrändern 54 und 55 gezeigt. Der Kopf 21 steht vorteilhaft in mindestens einer Richtung, insbesondere in Umfangsrichtung, über die Aufnahme 23 über. Bevorzugt steht der Kopf 21 sowohl in Umfangsrichtung an den Längsrändern 54 und 55 als auch in Richtung der Längsmittelachse 14 des Führungsrohrs 4 über die Aufnahme 23 über.

Wie Fig. 18 zeigt, verlaufen sowohl die Oberseite 43 als auch die Unterseite 49 des Kopfes 21 gewölbt. Die Wölbung der Unterseite 49 folgt dabei der Wölbung des Außenumfangs des Führungsrohrs 4, und die Wölbung der Oberseite 43 folgt einer Wölbung des Nutgrunds 53 der Nut 19 (Fig. 10). Die Auflageabschnitte 40 und 41 sind durch die in Umfangsrichtung über den Fuß 22 überstehenden Bereiche und, falls der Kopf 21 in Richtung der Längsmittelachse 14 des Führungsrohrs 4 über den Fuß 22 übersteht, durch deren Verlängerung in Richtung der Längsmittelachse 14 gebildet. An den Außenkanten 68 und 69 gehen die Auflageabschnitte 40, 41 in die Flanken 66, 67 über. Die Außenkanten 68 und 69 sind im Ausführungsbeispiel gerundet ausgebildet, so dass das Führungsteil 20 beim Verkippen geringfügig an der Außenseite des Führungsrohrs 4 abwälzen kann. Wie Fig. 18 auch zeigt, sind die Flanken 66 und 67 gegenüber der Mittellinie 56 des Führungsteils 20 geneigt. Die Flanken 66 und 67 schließen mit der Mittellinie 56 jeweils einen Winkel γ ein, der in Fig. 18 für die Flanke 66 eingezeichnet ist. Der Winkel γ beträgt vorteilhaft mindestens 5°. Als besonders vorteilhaft wird ein Winkel γ von 5° bis 20°, insbesondere von 7° bis 15° angesehen. Die Flanken 66 und 67 sind flächig und eben ausgebildet. Die Neigung der Flanken 66 und 67 ist so gewählt, dass die Flanken 66 und 67 bei den im Betrieb üblichen Kippwinkeln mit dem benachbart zur Oberseite 43 des Kopfes 21 angeordneten Bereich an den Längswänden 28 und 29 zur Anlage kommen, so dass sich eine geringe mechanische Belastung der Längswände 28, 29 und eine gute Krafteinleitung in das Gehäuse 5 ergibt. In gekipptem Zustand des Führungsteils 20 ergibt sich vorteilhaft eine flächige Anlage der Flanken 66 und 67 an den zugeordneten Längswänden 28, 29.

Die Außenkanten 68 und 69 sind vorteilhaft möglichst lang ausgebildet. Wie Fig. 19 zeigt, erstreckt sich die Außenkante 68 über einen Großteil der Länge f (Fig. 20) des Kopfes 21 des Führungsteils 20. Die Außenkanten 68, 69 können dabei unterbrochen ausgebildet sein. Vorteilhaft besitzt das Führungsteil 20 zwei, insbesondere mindestens drei Querschnitte senkrecht zur Längsmittelachse 14, in denen die Führungsabschnitte 34, 35 und die Flanken 66, 67 sowie die Außenkanten 68, 69 gleich ausgebildet sind. Diese Querschnitte bestimmen die Lage des Führungsteils 20 in der verkippten Stellung. Zwischen diesen Querschnitten können die Flanken 66, 67, die Führungsabschnitte 34, 35 und/oder die Außenkanten 68, 69 unterbrochen oder zurückgesetzt sein.

Die Höhe i ist die Gesamthöhe des Kopfes 21, wie Fig. 19 zeigt, und in einer Seitenansicht des Kopfes 21 zwischen dem äußeren Bereich des Auflageabschnitte 40, 41 und dem mittleren Bereich der Oberseite 43 gemessen.

Wie die Figuren 18 und 19 zeigen, weisen die Stirnseiten des Fußes 22 Halterippen 48 auf. Die Halterippen 48 sind schmal ausgebildet und erstrecken sich so weit über die quer zur Längsmittelachse 14 liegenden Stirnseiten 57 des Fußes 22, dass der Fuß 22 bei der Montage des Führungsteils 20 in der Aufnahme 23 zunächst fest in der Aufnahme 23 gehalten ist. Dadurch kann das Führungsteil 20 bei der Herstellung des Rasentrimmers 1 nicht unbeabsichtigt aus der Aufnahme 23 herausfallen. Im Betrieb kann sich das Führungsteil 20 durch Krafteinwirkung in der Aufnahme 23 in der beschriebenen Weise bewegen. Dabei werden die Halterippen 48 verformt oder abgeschert, so dass das Führungsteil 20 im üblichen Betrieb lose in der Aufnahme 23 liegt und durch den Nutgrund 53 der Nut 19 (Fig. 10) gegen Herausfallen gesichert wird. In Fig. 18 sind auch die Absätze 70 und 71 und die Einschnürungen 72 und 73 gezeigt.

Wie Fig. 20 schematisch zeigt, besitzt die Aufnahme 23 einen rechteckigen Querschnitt. Die Längsränder 54 und 55 verlaufen parallel zur Längsmittelachse 14, die in Fig. 20 ebenfalls schematisch eingezeichnet ist. Die Längsränder 54 und 55 der Aufnahme 23 verlaufen parallel zu den Außenkanten 68 und 69 des Kopfes 21, die in Fig. 18 gezeigt sind. Die zwischen den Längsrändern 54 und 55 verlaufenden Querränder 74 und 76 der Aufnahme 23 können eine beliebige Gestalt haben, wobei zwischen den Querrändern 75, 76 und dem Führungsteil 20 zumindest ein geringer Spalt in Richtung der Längsmittelachse 14 gebildet ist.

Der Kopf 21 des Führungsteils 20 kann vorteilhaft eine Länge f von etwa 8 mm bis 20 mm, insbesondere von 10 mm bis 15 mm und eine Breite c von 5 mm bis 15 mm, insbesondere von 5 mm bis 10 mm besitzen. Die Breite d des Fußes 22 beträgt vorteilhaft 3 mm bis 10 mm, insbesondere 4 mm bis 8 mm, und die Länge g des Fußes 22 beträgt vorteilhaft 3 mm bis 12 mm, insbesondere 5 mm bis 10 mm. Die in Fig. 19 gezeigte, in radialer Richtung gemessene Höhe v des Führungsteils 20 beträgt vorteilhaft 5 mm bis 15 mm, insbesondere 5 mm bis 10 mm. Die Höhe v des Führungsteils 20 und die Breite c des Kopfes 21 sind vorteilhaft etwa gleich groß. Die Höhe i des Kopfes 21 beträgt vorteilhaft weniger als die Hälfte der Höhe v des Führungsteils 20. Die Höhe i des Kopfes 21 kann vorteilhaft 1 mm bis 5 mm, insbesondere 2 mm bis 4 mm betragen.

Das gezeigte Führungsteil 20 bildet in beiden Schwenkrichtungen einen Drehanschlag. Das gezeigte Prinzip des Verkippens eines Führungsteils kann jedoch auch bei einer Anordnung aus Führungsrohr und Gehäuse vorgesehen sein, bei der die Schwenkrichtung nur in einer Richtung zu begrenzen ist. Das Führungsteil ist dann so auszuführen, dass es nur in einer Schwenkrichtung eine Erhöhung der Höhe des aus dem Führungsrohr 4 ragenden Abschnitts des Führungsteils ergibt. Die beschriebene Anordnung aus Führungsrohr und Gehäuse kann auch für andere Einsatzzwecke vorteilhaft sein.

## Patentansprüche

1. Anordnung aus einem Gehäuse und einem Führungsrohr, wobei ein Ende (31) des Führungsrohrs (4) in dem Gehäuse (5) gehalten ist, wobei die Position des Führungsrohrs (4) gegenüber dem Gehäuse (5) in Richtung einer Längsmittelachse (14) des Führungsrohrs (4) verstellbar ist, wobei mindestens ein Drehanschlag (32, 33) gegen ein Verschwenken des Führungsrohrs (4) gegenüber dem Gehäuse (5) vorgesehen ist, wobei der Drehanschlag (32, 33) ein Führungsteil (20) umfasst, wobei das Führungsteil (20) in einem der Bauteile von Führungsrohr (4) und Gehäuse (5) gelagert ist und an dem anderen Bauteil eine in Richtung der Längsmittelachse (14) des Führungsrohrs (4) verlaufende Längswand (28, 29) angeordnet ist, die bei einem Verschwenken des Führungsrohrs (4) um seine Längsmittelachse (14) mit dem Führungsteil (20) zusammenwirkt, **dadurch gekennzeichnet, dass** das Führungsteil (20) gegenüber dem Führungsrohr (4) um mindestens eine Kippachse (24, 25) verkippbar ist, wobei die Kippachse (24, 25) längs des Führungsrohrs (4) und in einem Abstand (a, b) zur Längsmittelachse (14) des Führungsrohrs (4) verläuft.

2. Anordnung nach Anspruch 1,
**dadurch gekennzeichnet, dass** der Kippwinkel (α, β, δ), um den das Führungsteil (20) aus einer Ruhelage um die Kippachse (24, 25) verkippbar ist, mindestens 1° beträgt.

3. Anordnung nach Anspruch 1 oder 2,
**dadurch gekennzeichnet, dass** die Kippachse (24, 25) außerhalb des Führungsrohrs (4) verläuft.

4. Anordnung nach einem der Ansprüche 1 bis 3,
**dadurch gekennzeichnet, dass** das Führungsteil (20) in einer Aufnahme (23) gehalten ist, wobei ein Fuß (22) des Führungsteils (20) mindestens teilweise in der Aufnahme (23) angeordnet ist und ein Kopf (21) des Führungsteils (20) aus der Aufnahme (23) ragt und mit der Längswand (28, 29) zusammenwirkt.

5. Anordnung nach Anspruch 4,
**dadurch gekennzeichnet, dass** der Kopf (23) des Führungsteils (20) in unbelastetem Zustand eine senkrecht zur Längsmittelachse (14) und senkrecht zur radialen Richtung (50) des Führungsrohrs (4) gemessene Breite (c) und eine radial zum Führungsrohr (4) gemessene Höhe (i) besitzt, wobei die Breite (c) des Kopfes (23) größer als dessen Höhe (i) ist.

6. Anordnung nach Anspruch 4 oder 5,
**dadurch gekennzeichnet, dass** die Breite (c) des Kopfs (21) größer als die in gleicher Richtung gemessene Breite (e) der Aufnahme (23) ist.

7. Anordnung nach einem der Ansprüche 4 bis 6,
**dadurch gekennzeichnet, dass** der Fuß (22) des Führungsteils (20) eine senkrecht zur radialen Richtung (50) und senkrecht zur Längsmittelachse (14) des Führungsrohrs (4) gemessene Breite (d) und eine in Richtung der Längsmittelachse (14) gemessene Länge (g) besitzt, wobei mindestens eine der Abmessungen von Breite (d) und Länge (g) kleiner als die in der gleichen Richtung gemessene Abmessung der Aufnahme ist.

8. Anordnung nach einem der Ansprüche 4 bis 7,
**dadurch gekennzeichnet, dass** der Fuß (22) mindestens einen Führungsabschnitt (34, 35) besitzt, der sich beim Verkippen des Führungsteils (20) um die Kippachse (24, 25) aus der Aufnahme (23) bewegt und der sich zylinderabschnittsförmig um die zugeordnete Kippachse (24, 25) erstreckt.

9. Anordnung nach Anspruch 8,
**dadurch gekennzeichnet, dass** der Führungsabschnitt (34, 35) sich beim Verkippen entlang eines Längsrands (64, 65) der Aufnahme (23) bewegt.

10. Anordnung nach einem der Ansprüche 4 bis 9,
**dadurch gekennzeichnet, dass** der maximale Kippwinkel (α, β) durch mindestens einen durch das Führungsrohr (4) und das Führungsteil (20) gebildeten Anschlag (36, 37) bestimmt ist.

11. Anordnung nach Anspruch 10,
**dadurch gekennzeichnet, dass** der Fuß (22) einen Anschlagabschnitt (38, 39) besitzt, der mit dem Führungsrohr (4) den Anschlag (36, 37) bildet.

12. Anordnung nach einem der Ansprüche 1 bis 11,
**dadurch gekennzeichnet, dass** die Aufnahme (23) einen rechteckigen Querschnitt besitzt.

13. Anordnung nach einem der Ansprüche 1 bis 12,
**dadurch gekennzeichnet, dass** die Aufnahme (23) am Führungsrohr (4) ausgebildet ist und dass das Führungsteil (20) in Richtung der Längsmittelachse (14) des Führungsrohrs (4) ortsfest am Führungsrohr (4) gehalten ist.

14. Anordnung nach einem der Ansprüche 1 bis 13,
**dadurch gekennzeichnet, dass** der Kopf (21) eine ebene, flächige Flanke (66, 67) besitzt, die beim Verschwenken des Führungsrohrs (4) um seine Längsmittelachse (14) mit dem Längsrand (28, 29) zusammenwirkt.

15. Handgeführtes Arbeitsgerät mit einer Anordnung aus einem Gehäuse (5) und einem Führungsrohr (4) nach einem der Ansprüche 1 bis 13, wobei an einem ersten Ende (30) des Führungsrohrs (4) ein Werkzeugkopf (2) angeordnet ist und wobei am zweiten Ende (31) des Führungsrohrs (4) das Gehäuse (5) angeordnet ist.

## Claims

1. Assembly comprising a housing and a guide tube, wherein one end (31) of the guide tube (4) is held in the housing (5), wherein the position of the guide tube (4) relative to the housing (5) is adjustable in the direction of a longitudinal central axis (14) of the guide tube (4), wherein at least one rotary stop (32, 33) is provided against a pivoting of the guide tube (4) relative to the housing (5), wherein the rotary stop (32, 33) comprises a guide part (20), wherein the guide part (20) is mounted in one of the components guide tube (4) and housing (5) and a longitudinal wall (28, 29) extending in the direction of the longitudinal central axis (14) of the guide tube (4) and acting together with the guide part (20) if the guide tube (4) is pivoted about its longitudinal central axis (14) is located on the other component,
**characterised in that** the guide part (20) is tiltable relative to the guide tube (4) about at least one tilting axis (24, 25), wherein the tilting axis (24, 25) extends along the guide tube (4) and at a distance (a, b) from the longitudinal central axis (14) of the guide tube (4).

2. Assembly according to claim 1,
**characterised in that** the tilting angle (α, β, δ) about which the guide part (20) can be tilted about the tilting axis (24, 25) from a neutral position is at least 1°.

3. Assembly according to claim 1 or 2,
**characterised in that** the tilting axis (24, 25) extends outside the guide tube (4).

4. Assembly according to any of claims 1 to 3,
**characterised in that** the guide part (20) is held in a receptacle (23), wherein a foot (22) of the guide part (20) is at least partially located in the receptacle (23) and a head (21) of the guide part (20) projects from the receptacle (23) and acts together with the longitudinal wall (28, 29).

5. Assembly according to claim 4,
**characterised in that** the head (21) of the guide part (20) has in the unloaded state a width (c) as measured perpendicular to the longitudinal central axis (14) and perpendicular to the radial direction (50) of the guide tube (4) and a height (i) as measured radially to the guide tube (4), the width (c) of the head (21) being greater than its height (i).

6. Assembly according to claim 4 or 5,
**characterised in that** the width (c) of the head (21) is greater than the width (e) of the receptacle (23) as measured in the same direction.

7. Assembly according to any of claims 4 to 6,
**characterised in that** the foot (22) of the guide part (20) has a width (d) as measured perpendicular to the radial direction (50) and perpendicular to the longitudinal central axis (14) of the guide tube (4) and a length (g) as measured in the direction of the longitudinal central axis (14), at least one of the dimensions of width (d) and length (g) being smaller then the dimension of the receptacle as measured in the same direction.

8. Assembly according to any of claims 4 to 7,
**characterised in that** the foot (22) has at least one guide section (34, 35), which moves out of the receptacle (23) if the guide part (20) is tilted about the tilting axis (24, 25) and extends around the associated tilting axis (24, 25) in the form of a cylinder section.

9. Assembly according to claim 8,
**characterised in that** the guide section (34, 35) moves along a longitudinal edge (64, 65) of the receptacle (23) in the tilting process.

10. Assembly according to any of claims 4 to 9,
**characterised in that** the maximum tilting angle (α, β) is determined by at least one stop (36, 37) formed by the guide tube (4) and the guide part (20).

11. Assembly according to claim 10,
**characterised in that** the foot (22) has a stop section (38, 39), which forms the stop (36, 37) with the guide tube (4).

12. Assembly according to any of claims 1 to 11,
**characterised in that** the receptacle (23) has a rectangular cross-section.

13. Assembly according to any of claims 1 to 12,
**characterised in that** the receptacle (23) is formed on the guide tube (4), and **in that** the guide part (20) is held stationary on the guide tube (4) in the direction of the longitudinal central axis (14) of the guide tube (4).

14. Assembly according to any of claims 1 to 13,
**characterised in that** the head (21) has a flat, planar flank (66, 67), which acts together with the longitudinal edge (28, 29) if the guide tube (4) is pivoted about its longitudinal central axis (14).

15. Hand-guided working implement with an assembly comprising a housing (5) and a guide tube (4) according to any of claims 1 to 13, wherein a tool head (2) is located at a first end (30) of the guide tube (4), and wherein the housing (5) is located at the second end (31) of the guide tube (4).

## Revendications

1. Dispositif composé d'un carter et d'un tube guide, une extrémité (31) du tube guide (4) étant retenue dans le carter (5), la position du tube guide (4) pouvant être réglée par rapport au carter (5) dans le sens d'un axe longitudinal médian (14) du tube guide (4), au moins une butée de rotation (32, 33) étant prévue pour empêcher un pivotement du tube guide (4) par rapport au carter (5), ladite butée de rotation (32, 33) comprenant un élément de guidage (20), l'élément de guidage (20) étant monté dans l'un des éléments constitués par le tube guide (4) et le carter (5), tandis qu'il est prévu sur l'autre élément une paroi longitudinale (28, 29) qui s'étend dans le sens de l'axe longitudinal médian (14) du tube guide (4) et qui, lors d'un pivotement du tube de guidage (4) sur son axe longitudinal médian (14), coopère avec l'élément de guidage (20),
**caractérisé en ce que** l'élément de guidage (20) est apte à basculer sur au moins un axe de basculement (24, 25) par rapport au tube guide (4), l'axe de basculement (24, 25) s'étendant le long du tube guide (4) et à une distance (a, b) de l'axe longitudinal médian (14) de celui-ci.

2. Dispositif selon la revendication 1,
**caractérisé en ce que** l'angle de basculement (α, β, δ) suivant lequel l'élément de guidage (20) bascule sur l'axe de basculement (24, 25) à partir d'une position de repos est d'au moins 1°.

3. Dispositif selon la revendication 1 ou 2,
**caractérisé en ce que** l'axe de basculement (24, 25) s'étend en dehors du tube guide (4).

4. Dispositif selon l'une des revendications 1 à 3,
**caractérisé en ce que** l'élément de guidage (20) est retenu dans un logement (23), une base (22) dudit élément de guidage (20) étant disposée au moins en partie dans le logement (23) tandis qu'une tête (21) de l'élément de guidage (20) dépasse du logement (23) et coopère avec la paroi longitudinale (28, 29).

5. Dispositif selon la revendication 4,
**caractérisé en ce que** la tête (23) de l'élément de guidage (20) présente, à l'état non contraint, une largeur (c) mesurée perpendiculairement à l'axe longitudinal médian (14) et perpendiculairement au sens radial (50) du tube guide (4), et une hauteur (i) mesurée radialement par rapport au tube guide (4), la largeur (c) de la tête (23) étant supérieure à sa hauteur (i).

6. Dispositif selon la revendication 4 ou 5,
**caractérisé en ce que** la largeur (c) de la tête (21) est supérieure à la largeur (e), mesurée dans le même sens, du logement (23).

7. Dispositif selon l'une des revendications 4 à 6,
**caractérisé en ce que** la base (22) de l'élément de guidage (20) présente une largeur (d) mesurée perpendiculairement au sens radial (50) et perpendiculairement à l'axe longitudinal médian (14) du tube guide (4), et une longueur (g) mesurée dans le sens de l'axe longitudinal médian (14), au moins une des dimensions constituées par le largeur (d) et la longueur (g) étant inférieure à la dimension du logement mesurée dans le même sens.

8. Dispositif selon l'une des revendications 4 à 7,
**caractérisé en ce que** la base (22) comporte au moins une section de guidage (34, 35) qui sort du logement (23) lors du basculement de l'élément de guidage (20) sur l'axe de basculement (24, 25), et qui s'étend avec une forme de section cylindrique autour de l'axe de basculement associé (24, 25).

9. Dispositif selon la revendication 8,
**caractérisé en ce que** la section de guidage (34, 35) se déplace le long d'un bord longitudinal (64, 65), lors du basculement.

10. Dispositif selon l'une des revendications 4 à 9,
**caractérisé en ce que** l'angle de basculement (α, β) maximal est défini par au moins une butée (36, 37) formée par le tube guide (4) et l'élément de guidage (20).

11. Dispositif selon la revendication 10,
**caractérisé en ce que** la base (22) comporte une section de butée (38, 39) qui forme avec le tube guide (4) la butée (36, 37).

12. Dispositif selon l'une des revendications 1 à 11,
**caractérisé en ce que** le logement (23) présente une section rectangulaire.

13. Dispositif selon l'une des revendications 1 à 12,
**caractérisé en ce que** le logement (23) est formé sur le tube guide (4), et **en ce que** l'élément de guidage (20) est retenu sur le tube guide de manière fixe dans le sens de l'axe longitudinal médian (14).

14. Dispositif selon l'une des revendications 1 à 13,
**caractérisé en ce que** la tête (21) présente un flanc (66, 67) plat et lisse qui, lors du pivotement du tube guide (4) sur son axe longitudinal médian (14), coopère avec le bord longitudinal (28, 29).

15. Appareil tenu à la main, avec un dispositif composé d'un carter (5) et d'un tube guide (4) selon l'une des revendications 1 à 13, une tête d'outil (2) étant disposée sur une première extrémité (30) du tube guide (4), et le carter (5) étant disposé sur l'autre extrémité (31) du tube guide (4).
